# EUROPEAN PATENT APPLICATION

(11) **EP 1 873 620 A1**
(43) Date of publication of application: **02.01.2008**
(21) Application number: 07101025.0
(22) Date of filing: 23.01.2007
(51) Int. Cl.: G06F 3/048

(54) **Character recognizing method and character input method for touch panel**

(30) Priority: 29.06.2006 JP 2006178890
(71) Applicant: Aki Corporation, Musashino-shi, Tokyo (JP)
(72) Inventor: Yoshida, Shuji, Musashino-shi Tokyo (JP)
(74) Representative: Carpintero Lopez, Francisco

(57) **Abstract**

Touching (T) an arbitrary position 4 on a screen 1 displayed on a touch panel sets a plurality of screen areas A, B, C, and D into which the screen is divided using lines L1 and L2 which contain the position 4 and which traverse the touch panel screen 1, and a first quadrant, a second quadrant, a third quadrant, and a fourth quadrant which correspond to the screen areas are set. Touching (T) an arbitrary position 5 belonging to one C of the screen areas allows a character assigned to the corresponding quadrant (third quadrant) to be recognized. Releasing the character at the position 5 allows the character assigned to that quadrant to be confirmed.

## Description

### CROSS-REFERENCE TO RELATED APPLICATION

The present application claims the benefit of the priority based on Japanese Patent Application No. 2006-178890 filed on June 29, 2006, and the contents of this patent application are incorporated herein by reference.

### BACKGROUND OF THE INVENTION

### 1. Field of the invention

The present invention relates to a character recognizing method and a character input method for a touch panel, and in particular, to a character recognizing method and a character input method for a touch panel on which a screen is displayed to allow a user to touch the screen to input characters.

### 2. Description of the related arts

A touch panel is an input device combined with a display such as an LCD to allow input operations for an instrument to be performed. To select one of the buttons displayed in a certain area on the screen, the instrument user touches the area on the touch panel to enable an input operation to be performed as if the button were pressed. Input devices using touch panels are widely used in bank ATMs, OA instruments, PDAs (portable information terminals), cellular phones, game machines, and the like.

A touch panel generally comprises two resistant films laid on top of each other via a spacer. The resistant films are integrated with the respective electrodes. Consequently, the upper resistance film serves as an upper electrode, while the lower resistance film serves as a lower electrode. This configuration provides the touch panel with two functions. A first function is as follows. When the instrument user touches the touch panel with their finger or the like, the upper electrode contacts the lower electrode. The touch panel thus determines that the input operation has been turned on. A second function is as follows. The upper electrode detects the position of the input point on the X axis. The lower electrode detects the position of the input point on the Y axis. The touch panel recognizes the coordinates of the input point on the basis of these two data. In other words, the upper and lower electrodes detect the voltage (analog) of the input point and subject the voltage to an AD conversion to obtain a digital value. The upper and lower electrodes thus recognize the X axis coordinate value and Y axis coordinate value, respectively, of the input point. Then, on the basis of the coordinate values of the input point, the electrodes recognize the input operation assigned to the button corresponding to the coordinate position.

A given limitation determined by the size of the finger is imposed on the input of characters to the touch panel in order to accurately detect the input coordinates. Accordingly, various efforts have been made to simultaneously display the functions and operations provided in the instrument, within a given screen. For example, portable information terminals such as PDAs (Personal Data Assistances) use an analog touch panel so that characters can be input by tracing the screen with a pen (stylus) instead of the finger.

On the other hand, Japanese Patent Laid-Open No. 2002-222053 discloses a kana input method using a liquid crystal touch panel. This kana input method displays strings in one horizontal line on the touch panel screen in a superimposed manner, while displaying the remaining strings in one vertical line in a superimposed manner. Then, one of the display characters arranged in the vertical line containing one of the characters in the horizontal line is touched to input that character.

Further, according to the data input method in Japanese Patent Laid-Open No. 2000-47807, with a criterion position (first coordinate) kept depressed and specified, a reference position (second coordinate) is specified. Within a short time after this, the specification of the reference position (second coordinate) is cancelled. This operation allows the performance of a data processing operation corresponding to a right click on the first depressed coordinate. Furthermore, the first coordinate is set to be the origin of a graph. Sixteen quadrants are provided on the X axis and Y axis so that different data processing operations can be performed in the respective quadrants.

With the method of depressing any of the buttons set in the screen of the touch panel in order to perform a character input operation for the instrument, the above limitation on the button area may disadvantageously prevent the user from easily operating the touch panel. The user may perform erroneous operations depending on how the buttons are depressed. In particular, for an instrument with a small display screen, the buttons are also small. This may make the user feel stress with operations and cause the user to perform erroneous operations.

Further, the method of inputting characters by tracing the screen with a pen (stylus) disadvantageously requires a long time for character inputting. This method may also result in erroneous operations such as inputting of incorrect characters and a failure to recognize ambiguous characters.

### SUMMARY OF THE INVENTION

The present invention solves these problems to provide a character recognizing method and a character input method for a touch panel which allow a user to easily perform character input operations to reduce the user's erroneous operations.

The present invention has the characteristics shown below.
(1) To accomplish this object, a character recognizing method for a touch panel according to the present invention is characterized by comprising, when an arbitrary position on a screen displayed on a touch panel is touched, setting a plurality of screen areas into which the screen is divided using lines which contain the position and which traverse the touch panel screen and quadrants corresponding to the screen areas and defining directions of the screen areas around the touched position, and when an arbitrary position belonging to one of the screen areas is touched, recognizing a character assigned to the corresponding quadrant.
(2) The character recognizing method for a touch panel preferably further comprises setting a change history pattern for the touched quadrant in the touch panel for each character, and after an arbitrary position on the displayed screen is touched, storing the change history pattern for the touched quadrant, and on the basis of the set change history pattern, recognizing the character assigned to the quadrant.
(3) In the character recognizing method for a touch panel, preferably, the screen of the touch panel is touched at an arbitrary position in the screen frame of the activated touch panel.
(4) In the character recognizing method for a touch panel, preferably, the lines traversing the touch screen are oblique lines crossing each other on the touch panel screen.
(5) In the character recognizing method for a touch panel, preferably, the lines traversing the touch screen are a line extending through the touch panel screen in a vertical direction and a line extending through the touch panel screen in a horizontal direction.
(6) In the character recognizing method for a touch panel, preferably, the recognized character is confirmed by releasing the character at the touched position.
(7) In the character recognizing method for a touch panel, preferably, the recognized character is an alphabetic character.
(8) A character input method for a touch panel according to the present invention is characterized by comprising, when an arbitrary position on a screen displayed on a touch panel is touched, setting a plurality of screen areas and corresponding quadrants into which the screen is divided using a line which contains the position and which traverses the touch panel screen, and when an arbitrary position belonging to one of the screen areas is touched, recognizing a character assigned to the corresponding quadrant.
(9) In the character input method for a touch panel, preferably, after an arbitrary position on the screen displayed on the touch panel is touched, sliding is carried out in accordance with a change history pattern for the touched quadrant which is assigned to each character to allow the touch panel to recognize the character assigned to the quadrant.
(10) In the character input method for a touch panel, preferably, the screen of the touch panel is displayed by touching an arbitrary position in the screen frame of the activated touch panel.
(11) In the character input method for a touch panel, preferably, the recognized character is confirmed by releasing the character at the touched position.
(12) In the character input method for a touch panel, preferably, the recognized character is an alphabetic character.

### BRIEF DESCRIPTION OF THE DRAWINGS

Figs. 1A to 1C are diagrams illustrating the basic configuration of an embodiment of a character recognizing method and a character input method according to the present invention;
Figs. 2A and 2B are diagrams illustrating basic operations of the embodiment of the character recognizing method and character input method according to the present invention;
Fig. 3 is a diagram illustrating a user's touch panel operation patterns according to the present embodiment;
Fig. 4 is a diagram illustrating lowercase alphabetic characters that are recognized if a quadrant is changed by means of sliding with the user's finger or the like according to the present embodiment;
Fig. 5 is a flowchart of a character recognizing method;
Fig. 6 is a flowchart of a character input method;
Fig. 7 is a conceptual drawing showing the basic concept of a character selecting method according an embodiment of the character recognizing method and character input method;
Fig. 8 is a diagram illustrating the basic operation of another embodiment of the character recognizing method and character input method; and
Figs. 9A to 9D are diagrams illustrating another embodiment of the correspondence between the change history in each quadrant and characters.

### DESCRIPTION OF PREFERRED EMBODIMENTS

Embodiments of the present invention will be described in detail below with reference to the drawings.

### (Basic Configuration)

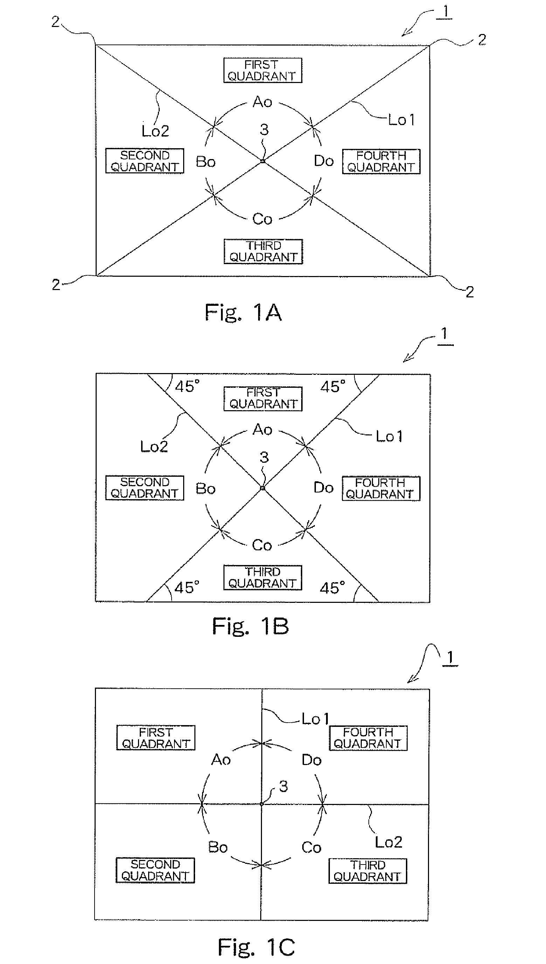

Fig. 1 shows the basic configuration of an embodiment of a character recognizing method and a character input method according to the present invention. In the present embodiment, as shown in Fig. 1A, a touch panel screen 1 is basically composed of oblique lines L01 and L02 on the touch panel screen 1, an intersecting point 3 between the oblique lines L01 and L02, and four areas A0, B0, C0, and D0 into which the screen is divided using the two oblique lines L01 and L02. A first quadrant to a fourth quadrant are also set corresponding to these areas. In the present embodiment, the oblique lines L01 and L02 are two diagonal lines each joining corners 2 of the touch panel screen 1. This allows a user to easily recognize the angles of the oblique lines and the areas into which the screen is divided using the oblique lines, on the basis of contour of the touch panel screen 1. However, the oblique lines L01 and L02 are not limited to the diagonal lines but may cross each other at an angle of about 45 ° with respect to the top and bottom sides of the touch panel screen as shown in Fig. 1B. Alternatively, the oblique lines L01 and L02 may cross each other at a different angle.

Fig. 1C shows another embodiment of the lines traversing the touch panel screen, that is, a line extending through the touch panel screen in a vertical direction and a line extending through the touch panel screen in a horizontal direction. In this case, the four areas A0, B0, C0, and D0 are located in the upper right, lower right, upper left, and lower left of the screen, respectively. Also in this case, the first quadrant to fourth quadrant are set corresponding to these areas. Alternatively, the lines traversing the touch panel screen may be a combination of a plurality of lines selected from the oblique lines, the line extending through the touch panel screen in the vertical direction, and the line extending through the touch panel screen in the horizontal direction, described above. Further, although the lines traversing the touch panel screen are displayed on the screen according to the present embodiment, the lines do not have to be displayed on the screen.

### (Basic Operations)

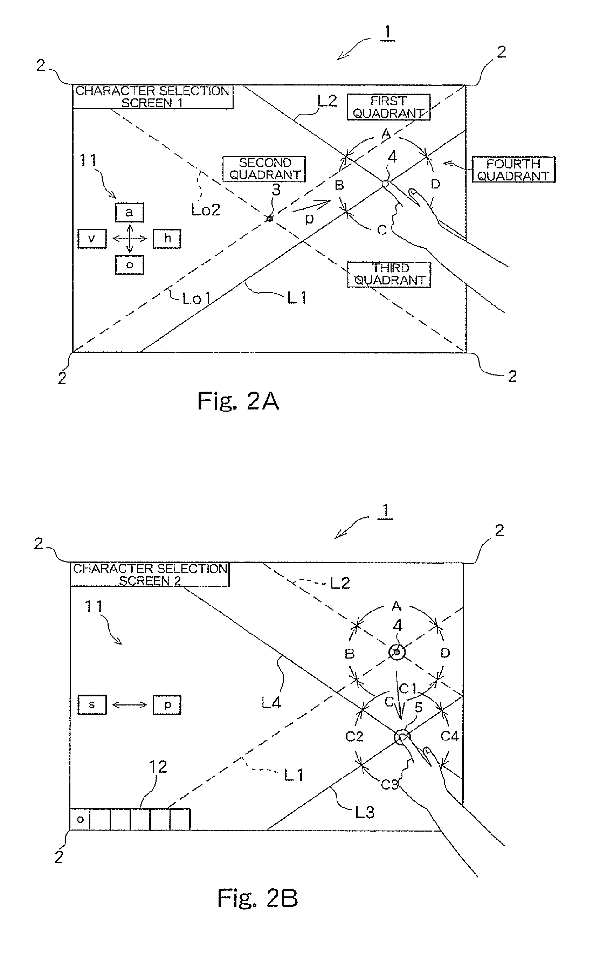

Figs. 2A and 2B show the basic operation of the embodiment of the character recognizing method and character input method according to the present invention. As shown in Fig. 2A, when the user touches an arbitrary first point 4 on a "character selection screen 1" displayed on the touch panel, an intersecting point 3 moves to the first point 4 as shown by arrow P in Fig. 2A. New oblique lines L1 and L2 are then set which contain the first point 4 and which are substantially parallel to the two oblique lines L01 and L02. Four areas A, B, C, and D are newly set into which the screen is divided using the two oblique lines L1 and L2. New quadrants are also set by moving the initial quadrants. The first to fourth quadrants define directions in the screen areas around the touched position on the touch panel screen 1. Consequently, if the touched position is changed, the screen areas correspondingly change, whereas the directions of the quadrants around the touched position remain unchanged.

Then, as shown in Fig. 2B, the user slides their finger downward in the figure while keeping it in contact with the screen. The user thus touches a second point 5 in a selected C area (third quadrant). Touching the C area with the user's finger or the like allows the screen to recognize the character "o" assigned to the C area. When the user releases their finger from the screen at the second point 5, the character "o" is recognized to have been confirmed. The confirmed character "o" is displayed on a character display board 12.

On the other hand, the user further slidingly moves their finger from the second point 5 in the third quadrant without releasing their finger from the screen. When the user slides their finger to the area A, B, and D, corresponding to the first, second, and third quadrants, that is, the quadrants other than the third quadrant, new characters "s" and "p" are recognized. When the user releases their finger from the screen in the corresponding area, these characters are recognized to have been confirmed.

### (Operation Patterns)

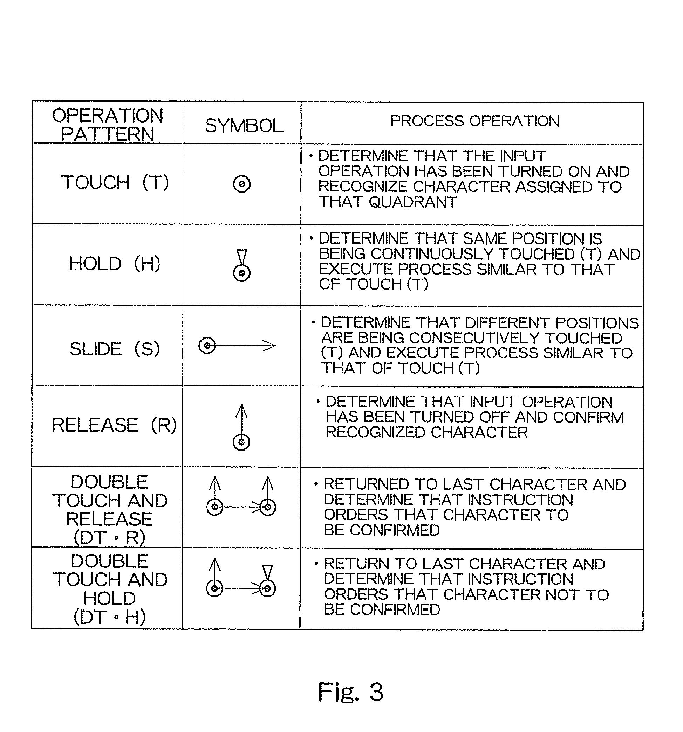

Fig. 3 shows the user's touch panel operation patterns, symbols for the operation patterns, and the corresponding process operations. These operation patterns include four basic operation patterns, a touch (T), a hold (H), a slide (S), and a release (R). The touch (T) means that the screen of the touch panel is touched with the user's finger or the like. The hold (H) means that the screen remains touched with the user's finger or the like. The hold (H) is determined to continuously touch (T) the same position and is processed similarly to the touch (T). The slide (S) means that the user's finger or the like stays in contact with the screen while being moved on the screen. The slide (S) is determined to consecutively touch different positions and is processed similarly to the touch (T). The release (R) means that during the touch, hold (continuous touching of the same position), or slide (continuous touching of different positions), the user's finger or the like is released from the screen. These basic operations may be performed with a pen or another tool instead of the user's finger. In the related figures of the specification, the basic operation patterns are denoted by the respective symbols. A basic operation pattern called tap may be provided in which the screen is tapped. This operation pattern may be distinguished from the touch (T).

The touch panel recognizes these basis operation patterns via its two functions: (1) a function for determining that an input operation is on or off and (2) a function for recognizing the coordinate values of an input point. For the touch (T), an upper panel and lower panel constituting the touch panel contact each other to allow the touch panel to determine that the input operation has been turned on. A process operation assigned to that quadrant is then performed. For the hold (H), the upper and lower electrodes remain in contact with each other, and the input operation is determined to remain on with those coordinate values. A process similar to that for the touch (T) is then executed. For the slide (S), the upper and lower electrodes keep contacting each other, and the coordinates of the contact point are recognized to have moved. The input operation is thus determined to remain on with the moving coordinate values, and a process similar to that for the touch (T) is then executed. For the release (R), the contact between the upper and lower electrodes is disrupted to allow the touch panel to determine that the input operation has been turned off. The recognized character is then confirmed.

The settings for the process operations for the basic operation patterns are not limited to those described above, and other embodiments are possible. For example, for the slide (S), while the user's finger kept in contact with the screen is moving on the screen, the touch panel may determine that the screen has been touched if a position resulting from the movement is held for a time longer than a given time, instead of determining that the different positions are being consecutively touched. In this case, the touch panel has a timer as its internal function to measure time for determination and processing.

According to the present invention, all input operations are performed using these basic operation patterns and applied operation patterns obtained by combining the basic operation patterns. Characters thus input to the touch panel are then recognized. Fig. 3 shows applied operation patterns obtained by combining the four basic operation patterns, the touch (T), hold (H), slide (S), and release (R). Basically, an applied operation pattern called a double touch cancels a confirmed screen. In the double touch, the screen is touched two consecutive times. In the present embodiment, double touch + release (DT 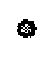 R) allows the touch panel to determine that an instruction has been given ordering the touch panel to return to and confirm the last character. This operation pattern is detected if two "touch (T) + release (R)" operations are performed at an arbitrary position on the screen displayed on the touch panel, within a given time (for example, 0.5 second or 1.0 second). One "touch (T) + release (R) " operation allows the touched character to be confirmed in accordance with the settings for the basic operation patterns. Consequently, the character remains unchanged. Subsequently, when the second touch (T) + release (R) is repeated within the given time, that character is cancelled. The last character is confirmed and displayed.

The present embodiment determines that the double touch + hold (DT 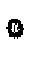 H) instructs the character to be changed to the last, different selection menu but does not require any confirmation. This operation pattern is determined if the first touch (T) + release (R) and the second touch (T) + hold (H) are executed at an arbitrary position in the character displayed on the touch panel, within a given time (for example, 0.5 second or 1.0 second). One touch (T) + release (R) operation confirms the touched character and no change of the character occurs. The second touch (T) + hold (R) within the given time after the first one cancels that character, with the last character recognized without being confirmed. The double touch (DT) may be defined as a double tap, an applied operation pattern in which the screen is tapped.

In the prior art, with the double touch (DT) with the user's finger or the like, touching exactly the same point is difficult. Thus, for example, the method disclosed in Patent Document 2 has been proposed. However, in the present invention, for all the input operations, no buttons are present on the touch panel screen 1. This eliminates the need to press a particular point twice. Therefore, the double touch (DT) is a simple operation and is rarely erroneously performed by the user.

### (Correspondence between the Quadrant Change History and Characters)

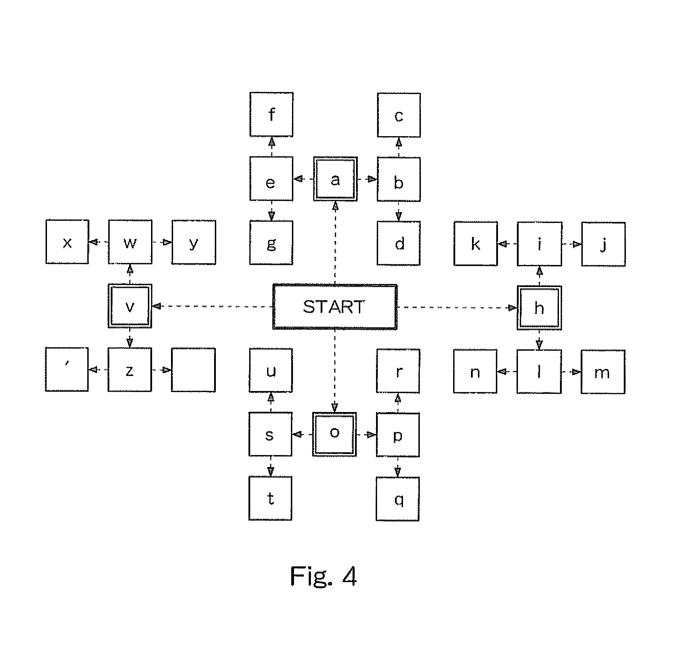

Fig. 4 shows lowercase alphabetic characters that are recognized if the quadrant is changed by sliding with the user's finger or the like. As shown in Fig. 4, the first slide (S1) from the first point 4 selects the lowercase alphabets "a", "h", "o", and "v" which are enclosed by double frames. At "a" in the first quadrant, the second slide selects "b" and "e". The third slide selects "c", "d", "g", and "f". Accordingly, selection of the first quadrant at the first point 4 selects the lowercase alphabetic characters "a", "b", "c", "d", "e", "f", and "g". Similarly, selection of the fourth quadrant at the first point 4 selects the lowercase alphabets "h", "i", "j", "k", "l", "m", and "n". Selection of the third quadrant at the first point 4 selects the lowercase alphabetic characters "o", "p", "q", "r", "s", "t", and "u". Selection of the second quadrant at the first point 4 selects the lowercase alphabetic characters "v", "w", "x", "y", and "z".

As described above, changing the quadrant by means of sliding enables all the lowercase alphabetic characters to be selected. The selected characters are not limited to the lowercase alphabetic characters but also includes uppercase alphabetic characters, numbers, and symbols. Alternatively, the selected characters may be Japanese kana or katakana. The above configuration for character selection is only illustrative, and the combination of quadrant change histories by means of sliding is not limited to it.

### (Character Recognizing Method and Character Input Method)

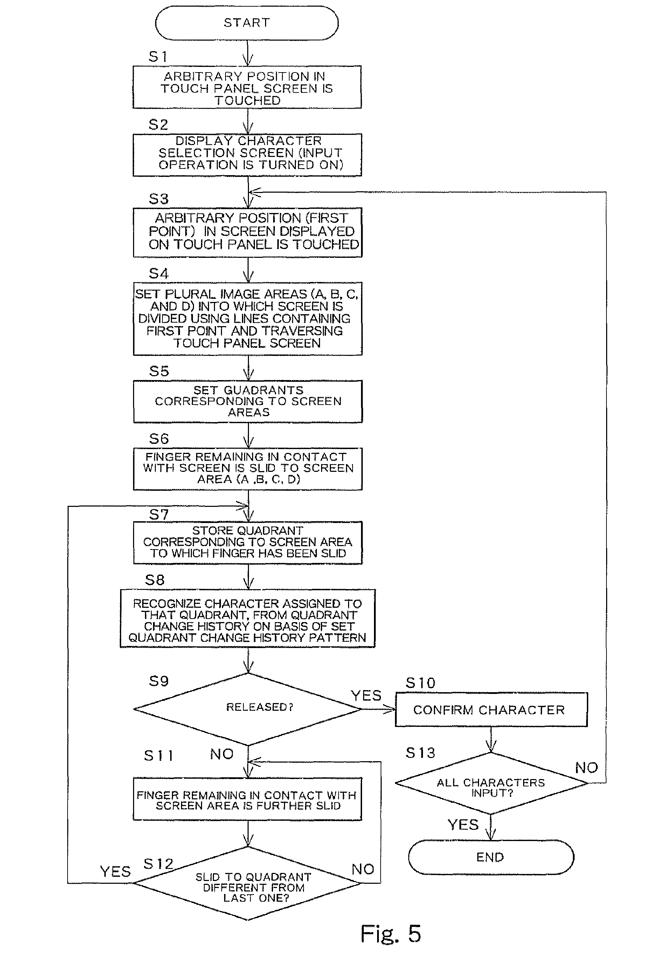

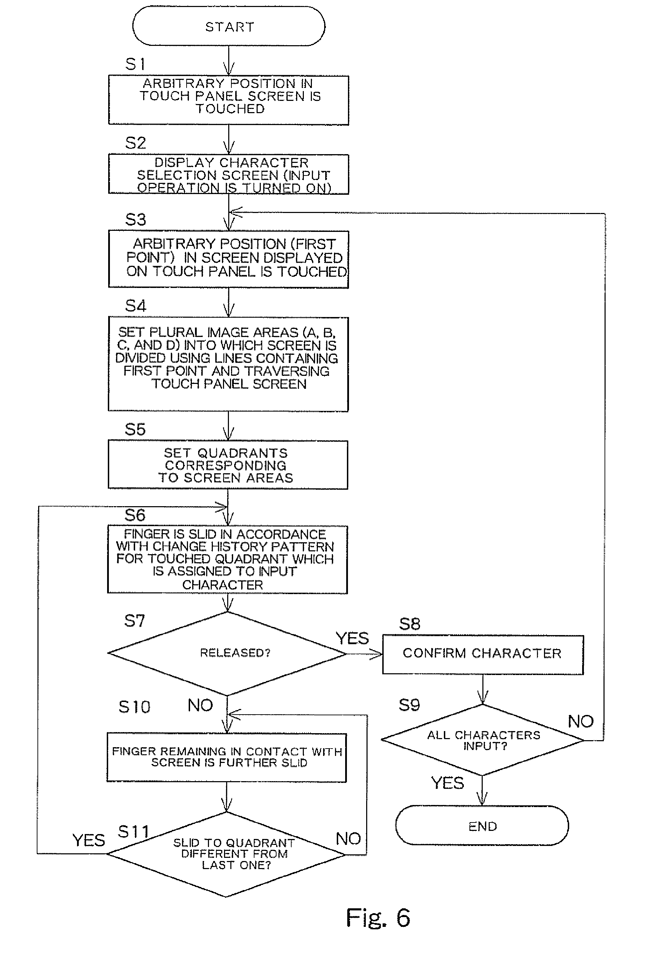

Fig. 5 shows the basic flow of a character recognizing method according to the present invention. Fig. 6 shows the basic flow of a character input method according to the present invention. The flow in Fig. 5 relates to the recognition of character inputs as viewed from the touch panel. The flow in Fig. 6 relates to operations for character inputs as viewed from the user. The flow in Fig. 6 is substantially similar to that in Fig. 5. Accordingly, the description below will be given with reference to the flow chart in Fig. 5. Reference numerals S1 to S13 show steps in the flowchart.

As shown in Fig. 5, with the touch panel powered on, the user touches an arbitrary position in the touch panel screen 1 (S1). The touch panel then displays a character selection screen (S2). Specifically, touching the arbitrary position in the touch panel screen 1 allows the touch panel to recognize that the input operation has been turned on to display the character selection screen. Consequently, the present invention eliminates the switches used in the conventional touch panels and enables initial operations to be performed by touching the screen.

The user touches the first point 4, the arbitrary position on the screen displayed on the touch panel (S3). The intersecting point 3 moves to the first point 4 . New oblique lines L1 and L2 are then set which contain the first point 4 and which are substantially parallel to the two oblique lines L01 and L02. Four areas A, B, C, and D are newly set into which the screen is divided using the two oblique lines L1 and L2 (S4). Quadrants are also set which correspond to the screen areas (S5). As shown in Fig. 2(a), in the present embodiment, a selection string 11 is displayed on the touch panel screen 1. The characters assigned to the respective quadrants are displayed to the user together with their directions.

The four areas A, B, C, and D are located above and below the first point 4, touched by the user, and to the right and left of the first point 4. This means that the user may move their finger or the like having initially touched the screen, upward, downward, rightward, or leftward. Consequently, this input method is very easy and is very unlikely to cause erroneous operations. Further, as shown in Fig. 1(c), if the lines traversing the touch panel screen are a line extending through the touch panel screen in the vertical direction and a line extending through the touch panel screen in the horizontal direction, the user may recognize the obliquely upper right, obliquely lower right, obliquely upper left, and obliquely lower left of the touched first point 4.

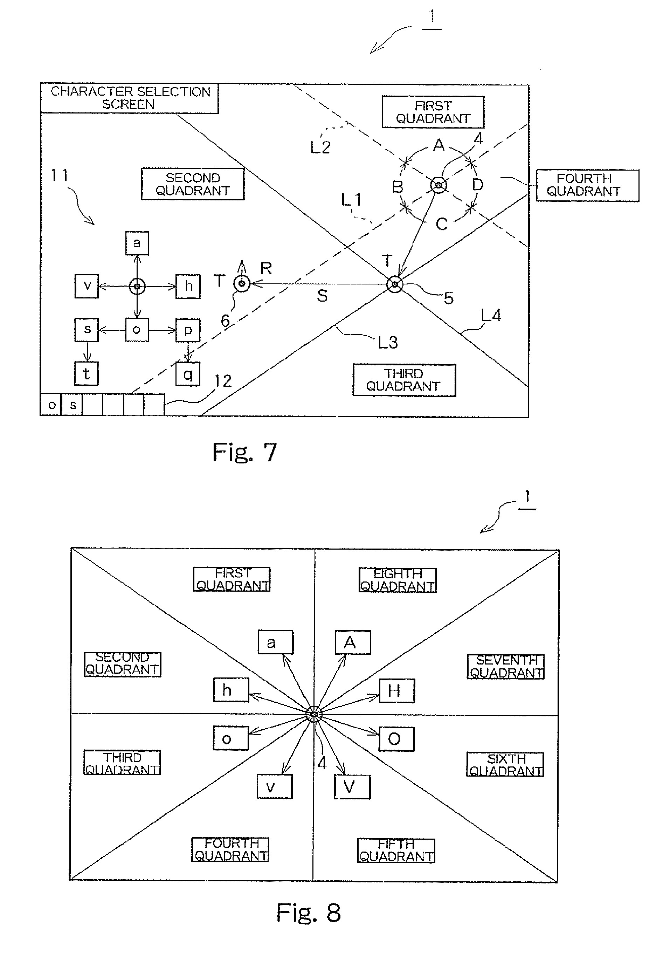

Fig. 7 shows a character selecting method according to an embodiment of the character recognizing method and character input method according to the present invention. In the following case, the user touches the first point 4 and then selects the characters "o" and "s". The user slides their finger, kept in contact with the screen, downward in the figure from the first point 4 (S6). When the user's finger or the like enters the third quadrant, the quadrant is stored (S7). The character "o" assigned to the third quadrant is then recognized. If the user releases their finger or the like from screen at the second point (S9), the character is determined to be "s", which has been recognized (S10). Accordingly, if the user continues the hold (H) or slide(S) without performing the release (R), the screen is not confirmed. If the user slides their finger without performing the release (R) (S11), a change of quadrant resulting from the slide is determined (S12). If the direction is the same as that of the last slide and the quadrant remains unchanged, the touch panel waits for a further slide. If the direction is different from that of the last slide and the quadrant is changed, the quadrant resulting from the slide is stored. The process then returns to S7. In Fig. 7, the user' s finger is slid from a second point 5 toward the second quadrant and a third point 6 is touched, "s" is thus recognized. The user releases their finger at the second point 5 (S7), and the character is determined to be the recognized "s" (S8).

That is, before the release (R), the user can allow the touch panel to change the quadrant by means of the slide (S) to recognize a different character. The selection string 11 displayed on the touch panel screen 1 displays the characters that are recognized if the quadrant is currently changed. Thus, the characters can be selected in the two-dimensional screen by the slide (S) and release (R) with the user's finger or the like.

### (Another Embodiment of the Character Recognizing Method and Character Input Method)

Fig. 8 shows the basic configuration of another embodiment of the character recognizing method and character input method. In this case, touching the first point 4 divides the screen into eight screen areas using the oblique lines, vertical line, and horizontal line. A first quadrant to an eighth quadrant correspond to these screen areas. Touching the quadrants allows the recognition of the lowercase alphabets "a", "h", "o", and "v" and the uppercase alphabets "A", "H", "O", and "V". After these characters are recognized, a change of the quadrant via the slide can be effected using the above method for the four quadrants.

### (Another Embodiment of the Character Recognizing Method and Character Input Method)

The above operation patterns are basically composed of the four patterns, the touch (T), hold (H), slide (S), and release (R). Accordingly, these operation patterns performed with the user's finger or the like can be orally input. For example, while keeping in touch with the touch panel screen 1 (T), the user can use a voice such as "up", "down", "right", or "left" to select characters instead of performing the slide (S) to select quadrants.

### (Another Embodiment of the Correspondence between the Quadrant Change History and Characters)

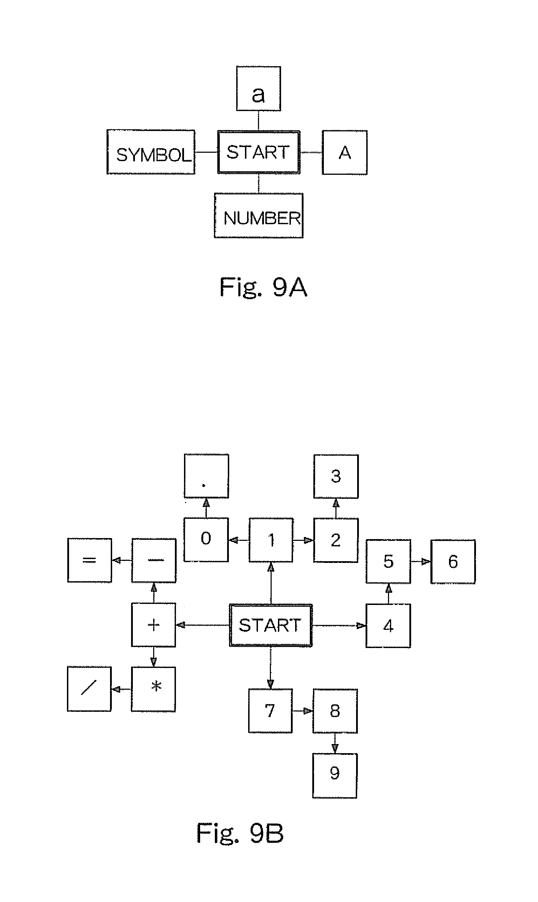

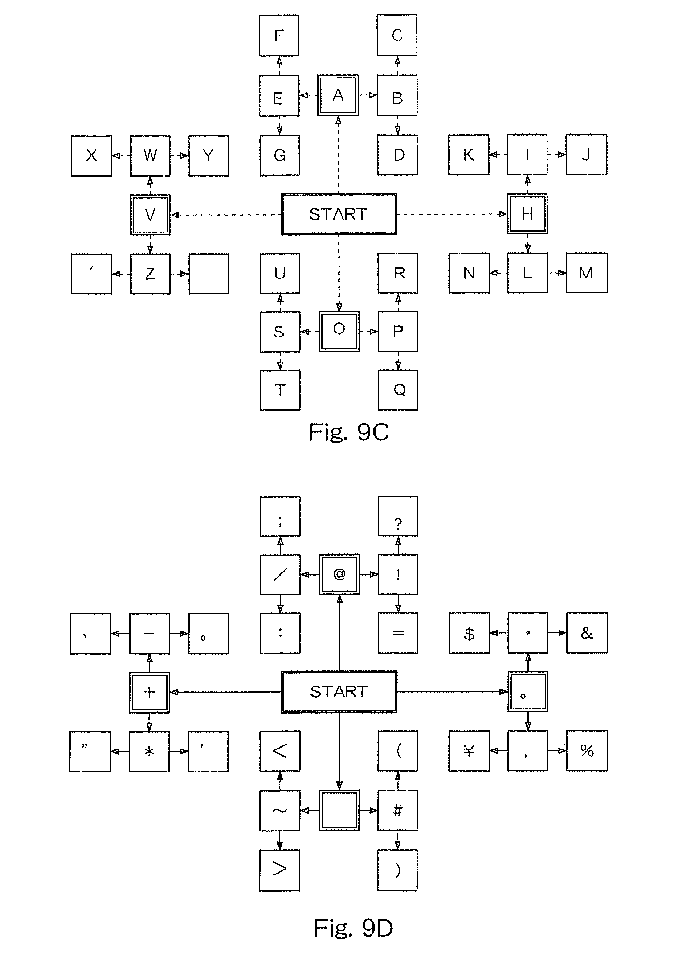

Figs. 9A to 9D show another embodiment of the correspondence between the quadrant change history and characters. The figures show methods for recognizing and inputting the types of uppercase alphabetic characters, numbers, and symbols, in addition to lowercase alphabetic characters. In the present embodiment, for each character type, first, an input switching operation is performed to select the character type. For example, Fig. 9A shows switching quadrants. In the present embodiment, a first quadrant corresponds to lowercase alphabetic characters, and a second quadrant corresponds to symbols. A third quadrant corresponds to numbers, and a fourth quadrant corresponds to uppercase alphabetic characters. Fig. 9B shows that an input switching operation has been performed to select numbers. Fig. 9C shows that uppercase alphabetic chracters have been selected. Fig. 9D shows that symbols have been selected.

## Claims

1. A character recognizing method for a touch panel, the method comprising, when an arbitrary position on a screen displayed on a touch panel is touched, setting a plurality of screen areas into which the screen is divided using lines which contain the position and which traverse the touch panel screen, and quadrants corresponding to the screen areas and defining directions of the screen areas around the touched position, and when an arbitrary position belonging to one of the screen areas is touched, recognizing a character assigned to the corresponding quadrant.

2. The character recognizing method for a touch panel according to claim 1, further comprising setting a change history pattern for a touched quadrant in the touch panel for each character, and after an arbitrary position on the displayed screen is touched, storing the change history pattern for the touched quadrant, and on the basis of the set change history pattern, recognizing the character assigned to the quadrant.

3. The character recognizing method for a touch panel according to claim 1 or 2, wherein the screen of the touch panel is touched at an arbitrary position in the screen frame of the activated touch panel.

4. The character recognizing method for a touch panel according to any of claims 1 to 3, wherein the lines traversing the touch screen are oblique lines crossing each other on the touch panel screen.

5. The character recognizing method for a touch panel according to any of claims 1 to 4, wherein the lines traversing the touch screen are lines extending through the touch panel screen in a vertical direction and in a horizontal direction.

6. The character recognizing method for a touch panel according to any of claims 1 to 5, wherein the recognized character is confirmed by releasing the character at the touched position.

7. The character recognizing method for a touch panel according to any of claims 1 to 6, wherein the recognized character is an alphabetic character.

8. A character input method for a touch panel, the method comprising, when an arbitrary position on a screen displayed on a touch panel is touched, setting a plurality of screen areas and corresponding quadrants into which the screen is divided using a line which contains the position and which traverses the touch panel screen, and when an arbitrary position belonging to one of the screen areas is touched, recognizing a character assigned to the corresponding quadrant.

9. The character input method for a touch panel according to claim 8, wherein after an arbitrary position on the screen displayed on the touch panel is touched, sliding is carried out in accordance with a change history pattern for the touched quadrant which is assigned to each character to allow the touch panel to recognize the character assigned to the quadrant.

10. The character input method for a touch panel according to claim 8 or 9, wherein the screen of the touch panel is displayed by touching an arbitrary position in the screen frame of the activated touch panel.

11. The character input method for a touch panel according to any of claims 8 to 10, wherein the recognized character is confirmed by releasing the character at the touched position.

12. The character input method for a touch panel according to any of claims 8 to 11, wherein the recognized character is an alphabet.
